(19) **Europäisches Patentamt / European Patent Office / Office européen des brevets**

(11) **EP 1 454 421 B1**

(12) **EUROPEAN PATENT SPECIFICATION**

(45) Date of publication and mention
of the grant of the patent:
**26.08.2015 Bulletin 2015/35**

(21) Application number: **02792942.1**

(22) Date of filing: **09.12.2002**

(51) Int Cl.:
**H04B 1/707** (2011.01)     **H04L 25/03** (2006.01)

(86) International application number:
**PCT/EP2002/013918**

(87) International publication number:
**WO 2003/052952 (26.06.2003 Gazette 2003/26)**

(54) **INTERFERENCE SUPPRESSION IN A CDMA RADIO RECEIVER**

STÖRUNGSUNTERDRÜCKUNG IN EINEM CDMA-FUNKEMPFÄNGER

SUPPRESSION D'INTERFERENCES DANS UN RECEPTEUR RADIO AMRC

(84) Designated Contracting States:
**AT BE BG CH CY CZ DE DK EE ES FI FR GB GR IE IT LI LU MC NL PT SE SI SK TR**

(30) Priority: **14.12.2001 US 17745**

(43) Date of publication of application:
**08.09.2004 Bulletin 2004/37**

(73) Proprietor: **Unwired Planet International Limited Dublin 2 (IE)**

(72) Inventors:
• **SOUROUR, Essam**
  **Carlsbad, CA 92009 (US)**
• **ERICSSON, Anders**
  **S-247 32 Södra Sandby (SE)**

(74) Representative: **McCann, Heather Alison et al**
  **EIP**
  **Fairfax House**
  **15 Fulwood Place**
  **London WC1V 6HU (GB)**

(56) References cited:
**EP-A- 0 981 206     WO-A-02/11308**
**US-B1- 6 175 587**

• **FLIKKEMA P G: "Decision feedback multipath cancellation for coherent direct sequence spread spectrum wireless networks" FIRST IEEE SIGNAL PROCESSING WORKSHOP ON SIGNAL PROCESSING ADVANCES IN WIRELESS COMMUNICATIONS (CAT. NO.97TH8281), FIRST IEEE SIGNAL PROCESSING WORKSHOP ON SIGNAL PROCESSING ADVANCES IN WIRELESS COMMUNICATIONS, PARIS, FRANCE, 16-18 APRIL 1997, pages 217-220, XP002208571 1997, New York, NY, USA, IEEE, USA ISBN: 0-7803-3944-4**

**Description**

**BACKGROUND**

This invention generally relates to communication techniques in multipath communication systems. More particularly, the present invention provides a method that improves the ability of a multipath receiver to separate signals having a small difference in delay.

Spread spectrum communication technology has been used in military communications since the days of World War II, primarily for two purposes: to overcome the effects of strong intentional interference on a certain frequency band and to protect the signal from unauthorized access. Both of these goals can be achieved by "spreading" the signal spectrum to make it virtually indistinguishable from background noise, hence the term "spread spectrum modulation."

Code Division Multiple Access, or CDMA, is a digital cellular spread spectrum multiple access method. In known CDMA systems, a number of base stations are typically located within a service area. Each base station uses one or more CDMA channels to communicate with one or more mobile stations located within the same service area. The base-to-mobile station transmission direction is known as the "forward link" or downlink, and the mobile-to-base station direction is known as the "reverse link" or uplink.

In a CDMA system, an information data stream to be transmitted is modulated by a data sequence with a much higher data rate, referred to as a "signature sequence." Each element of the signature sequence typically represents one binary logical symbol ("0" or "1 "). The signature sequence usually comprises N bits, wherein each of the N bits is denoted as a "chip." One way to generate such a signature sequence is by using a periodic binary sequence of pseudorandom signals to modulate a periodic impulse stream of period $T_c$, also referred to as the "chip duration." The sequence of pseudorandom signals is also known as a pseudo noise (PN) sequence, so called because it appears random but can be replicated by an authorized receiver.

The information data stream and the high bit rate signature sequence are combined by first mapping the binary logical signals ("0" or "1") to real values ("+1" or "-1") and multiplying the two bit streams together. The combination of the lower bit rate information data stream with the higher bit rate signature sequence creates a noiselike wideband signal. This technique is called "coding" or "spreading" the information data stream and is well known in the art.

In traditional cellular communication systems, co-channel interference between channels due to spectrum reuse is one of the main limiting factors in achieving a high system capacity. One of the most notable features of CDMA technology is universal frequency reuse, which means that all users within a CDMA system occupy a common frequency spectrum allocation. This is accomplished by allocating different codes to different channels. On the downlink, each base station transmits a unique, unmodulated spreading code, called either a "pilot code," a "pilot channel," or simply a "pilot." The pilot generally consists of a sequence of chips, each having a chip duration $T_c$. Each pilot is a different shift of a common complex sequence. Hence, on the forward link, each base station transmits a unique, unmodulated pilot channel, and may additionally transmit a synchronization channel, paging channels, and traffic channels. The term "CDMA channel set" is used to refer to a set of channels transmitted by a base station.

Each mobile station in a CDMA system searches for pilot codes to detect the presence of base station signals and to measure their strengths. For purposes of this disclosure, a forward CDMA channel set containing one or more traffic channels assigned to the mobile station is referred to as an "active channel," and the pilot signal of such an active channel is referred to as an "active pilot." Conversely, a CDMA channel set which contains no traffic channels assigned to the mobile station is referred to as a "non-active channel," and the pilot signal of such a non-active channel is referred to as a "non-active pilot." Since no traffic information is transmitted from the base station to the mobile station on the non-active channels, there is no need for demodulating these channels. Thus, the mobile station must only be able to demodulate the active CDMA channel sets.

A well-known source of degradation common to all known wireless multiple access systems, particularly in terrestrial environments, is known as "multipath fading." In a multipath environment, the transmitted signal follows several propagation paths from a transmitter to a receiver, typically as a result of the signal reflecting off one or more objects before arriving at the receiver. Since the various propagation paths of the transmitted signal are of unequal lengths, several copies of the transmitted signal, referred to as "rays," will arrive at the receiver with varying time delays. In a multipath fading channel, phase interference between different rays may cause severe fading and result in signal dropout or cancellation.

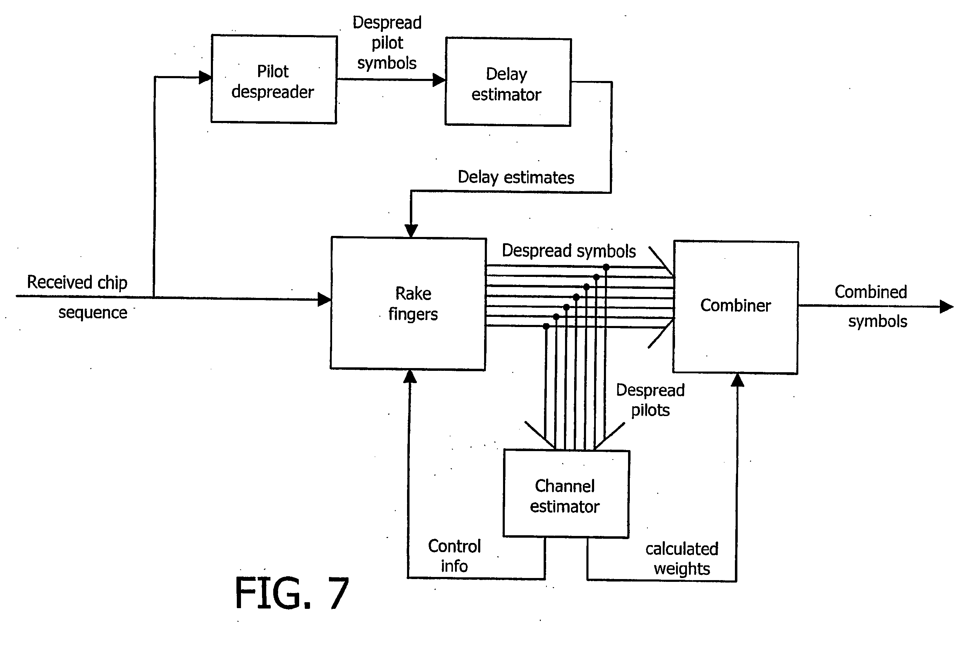

A mobile station in a CDMA system is typically equipped with a receiver for demodulating active channels and compensating for multipath delays. A block diagram of a typical CDMA receiver is shown in Figure 7. The receiver is generally referred to as a RAKE receiver, since it "rakes" all the multipath contributions together. A RAKE receiver consists of a number of processing units, or RAKE "fingers", and a combiner, which combines the output from the each of the RAKE fingers. When demodulating a multipath fading channel, each finger of the RAKE receiver must be synchronized with one of the diverse propagation paths of the channel. A RAKE receiver comprising L fingers is able to detect, at most, *L* copies of the transmitted signal, which are individually despread by the RAKE fingers according to the individual delays and added coherently in the combiner. At the addition performed by the combiner, each despread output from a RAKE finger is multiplied with a complex weight. Typically, these weights can be set as the complex conjugate to the channel impulse response at the appropriate delays. For this, the channel impulse response must be estimated at the delays, a process which, for example, can be made by a separate algorithm in the DSP. The resulting signal will thus comprise a collection of all the time delayed copies of the transmitted signal.

As previously described, due to multipath propagation, the transmitted signals will arrive at different times at the mobile station and result in a number of time delayed copies of the transmitted signal at the receiver. The relative time delays of the received rays must be determined in order to synchronize the various rays with the corresponding fingers of the RAKE receiver. Unfortunately, the number and magnitude of the time delays may change due to movement of the mobile station, i.e., variable distance and velocity relative to the transmitting base station for users in motion. Also, movement of the mobile station may cause new channel paths to appear and old channel paths to disappear. Hence, the mobile station must continuously monitor the signals received along all propagation paths of an active channel in order to search for new, stronger channel paths. To perform this monitoring efficiently, the multipath time delays must be substantially continually measured or estimated in a fast and accurate manner. Typically, this is performed by a channel delay estimator.

The simplest approach to delay estimation (DE) is evaluating the impulse response of the channel over the whole range of the possible delays, or the delay spread, of the channel. The resulting complex delay profile (CDP) or power delay profile (PDP) may then be subjected to peak detection, and the peak locations are reported to the RAKE as the delay estimates. However, the processing and power consumption expense of frequently executing this path searching routine is usually prohibitive. Therefore, typical implementations use shortened search windows, reduced searcher resolution, and additional short sub-searchers to produce higher-resolution estimates of certain areas of the PDP.

A typical approach in the case where several distinct multipath channels with different path structure need to be characterized includes applying a delay estimation and subsequent channel estimation algorithm to each of these channels.

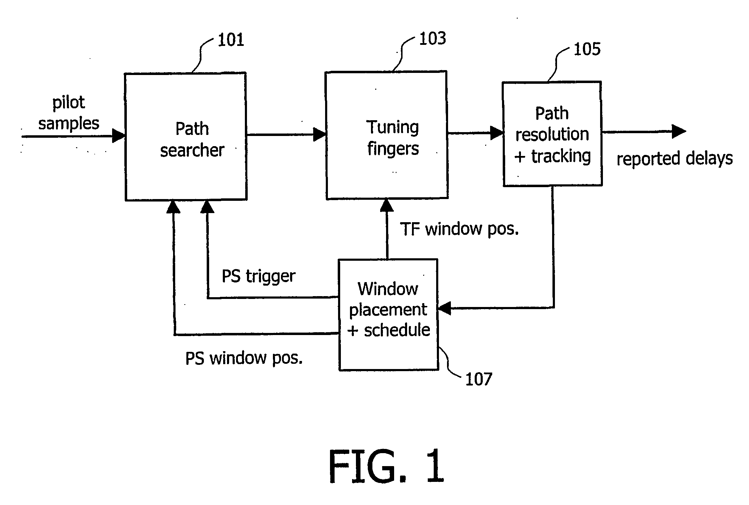

For reference, we review a typical delay estimation (DE) approach, shown in Figure 1. Since the realization of the DE functionality depends on the specific system parameters and hardware resources, a universally applicable solution cannot be presented. Still, while there exist a number of basic architectures for DE, and even more numerous detailed variations thereof, a fairly advanced practical implementation can be said to include of the following stages:

- Path searcher (PS) 101 - a device that computes instantaneous impulse response estimates (complex or power) over a range of delays that constitute a significant fraction of the maximal delay spread allowed by the system. The CDP or PDP for a given delay value is estimated e.g. by correlating the received data for pilot symbols with an appropriately delayed copy of the spreading sequence, a method well known in the art. The PS is often used mainly as a means to detect the existence of paths and its output resolution may be lower than that required by the RAKE.
- Tuning finger (TF) 103 - a device for producing a high-resolution instantaneous CDP or PDP over a narrow delay window. TF's are commonly used to locally refine the coarse PDP information provided by the PS.
- Path resolving, tracking, and reporting 105 - a set of signal processing and logical algorithms to extract physical path location information from the PS and TF output and to present delay estimates consistently to subsequent RAKE receiver stages. The unchanging assignment of paths to RAKE fingers is necessary to support power and interference estimation for each finger. The degree of complexity of these algorithms varies significantly depending on system parameters, ranging from simple peak detection to sophisticated deconvolution and filtering.
- Scheduling and window placement 107 - control logic that determines the timing of PS and TF activation and their window positions for each cycle. The timing may be fixed (periodic) or depend on signals derived from the environment, while the positioning usually depends on the location of previously detected paths.

To increase the robustness of DE under various difficult channel conditions (low signal-to-interference ratio (SIR), wide delay spread, closely-spaced paths, etc.), averaging or memory may be added to the algorithms so that the DE process operates across many channel fading cycles and is not significantly affected by the instantaneous fading realization.

Following DE, channel estimation (CE) for the reported delays is performed by turning despreaders to these delays and using the despread pilot symbols to deduce the complex path coefficient for a given delay. A variety of filtering or smoothing methods may be applied to these instantaneous estimates, in order to improve the quality of the channel estimates. These methods are well known in the art.

Regardless of the specific implementation, the complexity of the DE process is significantly higher than that of the CE operation. Similarly, the sensitivity of DE to low SIR conditions is significantly higher, causing rapid deterioration below a certain threshold, compared to the CE process which degrades more gradually.

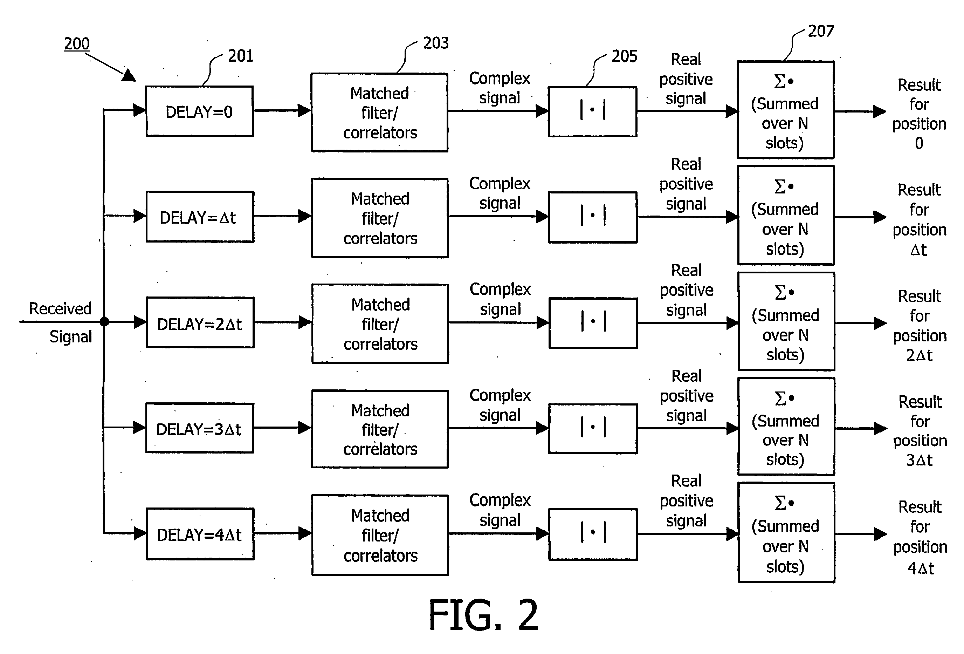

It can be appreciated that the quality of performance of a RAKE receiver is related to how well the channel delay estimator performs. The more accurate the estimates of signal path delays, the better the RAKE receiver will perform. An exemplary channel delay estimator 200 is illustrated in Figure 2. The channel delay estimator 200 tests differently delayed versions of the received signal for correlation with a given spreading sequence. For each hypothesized delay, the degree of correlation determines whether the hypothesized delay represents an actual delay experienced by the received signal. To carry out this process, the exemplary channel delay estimator 200 has five "probing fingers", each associated with one of five hypothesized delays: $t_0$, $t_1$, $t_2$, $t_3$, and $t_4$. These could, for example, be equally spaced with respect to one another, such as at 0, $\Delta t$, $2\Delta t$, $3\Delta t$, and $4\Delta t$, as illustrated in Figure 2. As can be appreciated, there will always be some minimal amount of delay, so having $t_0 = 0$ absolutely may not be physically possible. However, the delay associated with $t_0$ may be used as a base offset, with each of the hypothesized delays reduced by the base offset amount, making it possible for $t_0 = 0$ relative to the base offset. By making $\Delta t$ small, it is possible to fine tune a delay estimate and track changes in the delay. The choice of five probing fingers in this example is merely for illustration: The number of probing fingers in any particular embodiment is a design choice that can be less than, equal to, or greater than five.

Except for introducing a different amount of delay, each probing finger operates in the same manner. Thus, focusing now on the probing finger associated with a delay equal to zero (i.e., no delay), the received signal is supplied to a delay unit 201 that aligns the signal to be processed in accordance with the hypothesized delay (in this case, a delay of zero). The (delayed) received signal is then passed through a matched filter 203, which may be a correlator. The matched filter 203 generates an estimate of the impulse response of the channel. This estimate is generally a complex-valued signal.

If the channel parameters are subject to fast changes, the estimates, made for each of a number N of time slots, may be summed non-coherently. This means that the absolute value of the complex signal is determined (block 205), and then summed with the values obtained for the signal during other time slots (summing block 207). Alternatively, if the channel parameters are subject to slow changes, then the channel estimates may be summed coherently, so that the absolute value block 205 would not be present. In other alternative embodiments, a combination of coherent and non-coherent averaging is also possible.

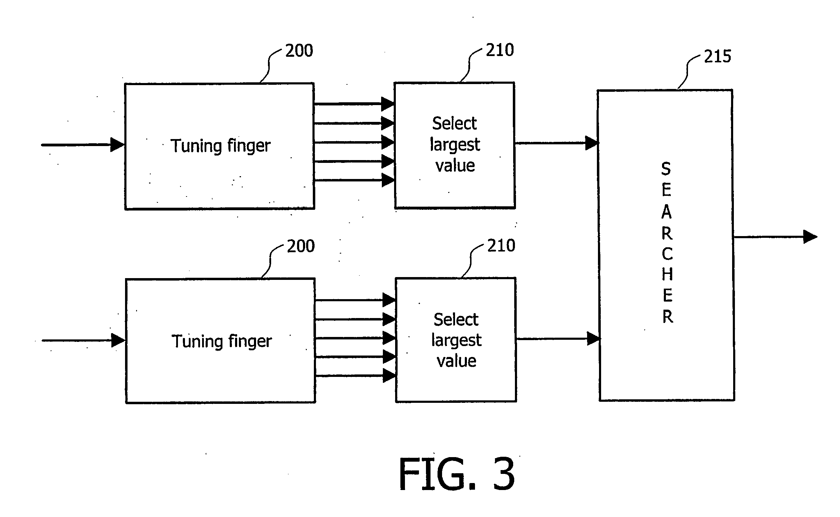

In either case, the result of the summing block 207 for each position (0, $\Delta t$, $2\Delta t$, $3\Delta t$, and $4\Delta t$) are compared and the position having the highest summed value is selected, as shown in Figure 2. The real-valued summed results for each signal position of the channel delay estimator 200 are fed into a selector 210. The selector 210 determines the position having the highest summed value. The parameters associated with this position, such as the estimated delay or impulse response, may be used by the RAKE receiver. For example, in Figure 3, the position parameters may be used by the searcher 215 to synchronize the RAKE receiver to different paths.

The fact that the channel is fading will prevent every time slot from contributing to the estimate of the delays. However, the variations of the channel in general are such that the fading process is much faster than the changes of the delays. Thus, if we assume merely for the sake of example that, on average, there are two equally strong paths with gain $h_1$ and $h_2$, two peaks will be built up over time in the cumulated sum over different time slots, so long as the delays are sufficiently well separated in time.

A problem exists, however, when the mutual difference in delay between multiple paths is small. In such cases, the accumulated sum may exhibit only one large peak that is situated somewhere between the true delays associated with two or more channel paths. As a consequence, only one path will be detected. This will detrimentally affect the performance of the RAKE receiver since, as mentioned above, the quality of performance of a RAKE receiver is related to how well the channel delay estimator performs.

As can be appreciated, taking the absolute value of the complex signal results in the loss of the phase component of the signal. Prior art related to interference cancelling requires that the tuning finger not only report the absolute values to the digital signal processor (DSP), but also give information on the complex values. The interference cancelling can, e.g., be done by subtracting a pulse shape corresponding to the transmitter and receiver filters in one path from a second path, with a gain and a phase of the pulse shape according to the largest peak, given by the calculations of the tuning fingers. Hence, the information from one path can be used for subtraction at a second path, thereby reducing the interference from the former path.

Needing the complex values, rather than the absolute values, gives rise to a more complicated hardware, and also limits the possibilities for non-coherent averaging. Furthermore, the estimates of the phase for different paths must have been made recently in order to be useful, since these vary over time. With the tuning fingers being a common resource, the requirement of having recent estimates will limit the freedom of an allocation scheme for the tuning fingers to paths with a small difference in time.

Accordingly, there is a need in the art to provide a method in a receiver to differentiate between closely-spaced transmission paths in a multipath communication system.

WO 0211308 discloses an equalizer which operates on chip or sub-chip resolution input samples of a received spread-spectrum multipath signal to remove interference from one or more secondary propagation path signals within the multipath signal. The equalizer may be configured for cancellation of secondary signals arriving before and after a main propagation path signal, referred to as pre- and post-cursor signals, respectively. An associated communications system provides the equalizer with a path coefficient and delay value for each secondary path signal for which cancellation is desired. The equalizer cancels secondary signals displaced in time by amounts as small as the input sample time resolution or by amounts exceeding multiple chips, or even multiple symbols. The length of sample delay buffers within the equalizer, in combination with the input sample rate, determines the maximum secondary signal delay accommodated by the equalizer.

## SUMMARY

In a CDMA receiver, a searcher is used to synchronize the RAKE receiver to different paths in multi-path channels. Overlapping multi-path components interfere with each other and are therefore difficult to synchronize to. This invention provides a method that permits the use of more complex interference reduction methods while maintaining a simple system architecture.

For each path, a small number of correlators are used to track delays in a CDMA receiver. We refer to this collection of correlators as tuning fingers. The inventive technique could be used to improve the performance of tuning fingers. Tuning fingers try to estimate and track the different channel delays in a fading multipath channel for a CDMA system, using coherent or non-coherent averaging. The estimated delays are then used to synchronize the RAKE receiver. Using non-coherent mean values, paths with only a small difference in delay will introduce interference relative each other. This invention proposes a method to overcome this problem.

In accordance with the present invention, a method for reducing interpath interference between a first path signal and at least one other path signal in a channel delay estimator in a radio receiver is provided. The method involves the steps of the appended claim 1.

In accordance with another aspect of the invention, there is a channel delay estimator in a receiver comprising the elements of the appended claim 4.

In accordance with still another aspect of the invention, there is a mobile radio terminal in accordance with the appended claim 7.

It should be emphasized that the term "comprises" or "comprising," when used in this specification, is taken to specify the presence of stated features, integers, steps, or components, but does not preclude the presence or addition of one or more other features, integers, steps, components, or groups thereof.

## BRIEF DESCRIPTION OF DRAWINGS

The objects and advantages of the invention will be understood by reading the following detailed description in conjunction with the drawings in which:

Figure 1 is a block diagram of a typical delay estimator structure;
Figure 2 is a block diagram of a conventional channel delay estimator;
Figure 3 is a block diagram of a portion of a conventional RAKE receiver;
Figure 4 depicts the waveforms of two rays in a multipath system;
Figure 5 depicts a cross section of Figure 4 at time $t=d_1$;
Figure 6 is a block diagram of a portion of a channel delay estimator according to an embodiment of this invention; and
Figure 7 is a block diagram of a typical CDMA receiver.

## DETAILED DESCRIPTION

The present invention involves a method and apparatus allowing for the improved cancellation of interference caused by closely-spaced rays in a multipath system.

In a multipath environment, the receiver may receive several copies of the same transmission, with each transmission having a different delay. While a RAKE receiver could use a correlator to tune to each of these signals, this may not be economically feasible. Accordingly, a RAKE receiver typically selects a finite number of rays to receive. The selection may be done with the aid of a channel delay estimator. One method used to select which rays to receive is based on signal strength. However, other criteria may be used. Once a ray is chosen, the RAKE receiver determines the delay of the component signal in order to time-align the spreading code with the signal. Thus, the relative delay of each ray is known in the RAKE receiver.

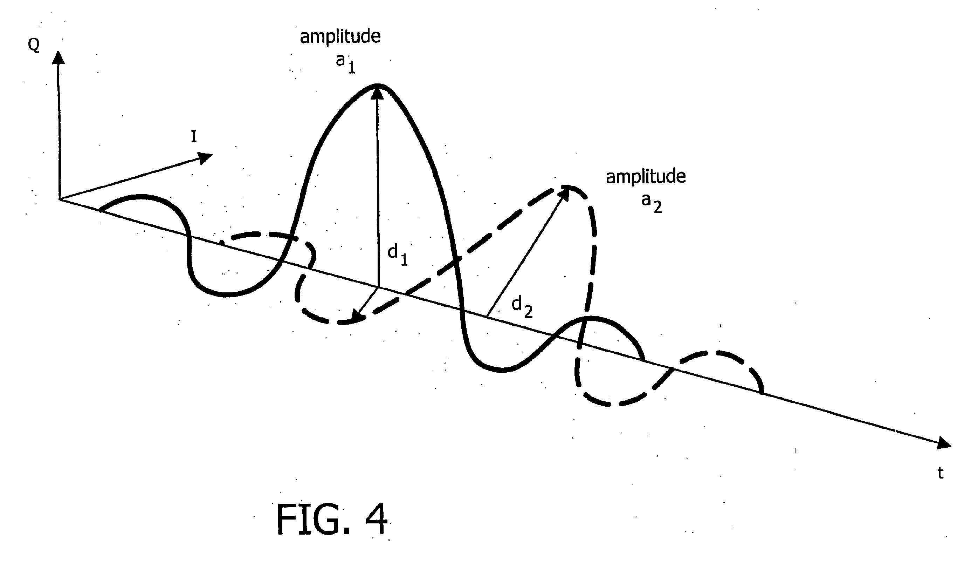

Figure 4 depicts the waveforms of two rays in a multipath system. The waveforms are plotted in three dimensions, with the quadrature (Q), in-phase (I), and time (t) axes oriented at right angles. As shown in Figure 4, the first ray may have an amplitude $a_1$ and a delay $d_1$. The second ray may have an *amplitude* $a_2$ and a delay $d_2$. Each ray may be in a plane oriented somewhere between the I and Q axes. As can be appreciated, the depicted orientation of the two rays is for purposes of illustration and not to limit the invention. Likewise, while the figures and text describe the invention is relation to two rays, this is done to simplify the explanation of the invention and not to limit the scope of the invention.

As shown in Figure 4, the impulse response corresponding to the first ray and the impulse response corresponding to the second ray may occur at different times. However, each impulse response may overlap the other and may result in an amount of interference.

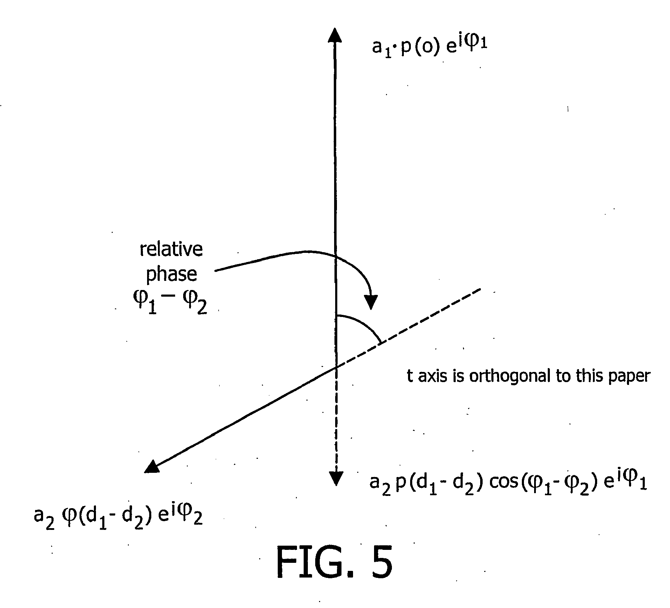

Figure 5 shows a cross section of Figure 4 at time $t=d_1$. The first ray has a relative phase of $(\phi_1 - \varphi_2)$ with respect to the second ray. As shown in Figure 5, only a portion of the second ray interferes with the first ray. The interfering portion can be calculated using Equation 1.

$$\varepsilon_{12}(i) = a_2 \cdot p(d_1 - d_2) \cdot \cos(\phi_1 - \phi_2) \cdot e^{i\phi_1} \qquad (1)$$

In Equation 1, $\varepsilon_{12}(i)$ is the magnitude (or absolute value) of the interference from the second ray projected onto the first ray at a particular instant $i$ in time and $p(t)$ is the impulse response of the transmitter and receiver filters. The impulse response may depend upon the type of service being used. For example, while Figure 4 shows a sync-like impulse response, the impulse response may just as easily be a root-raised cosine for a UMTS transmitter and receiver. As can be appreciated, the techniques described in this disclosure may be applied to a variety of network types, regardless of the characteristics of the filters.

Once the magnitude of the interference is determined, the interference signal may be subtracted from the first ray. As can be appreciated, an interference signal may be determined for a plurality of signals. Accordingly, the magnitude of the interference from the *Nth* ray projected onto the *Kth* ray at a particular instant $i$ in time may be calculated using Equation 2.

$$\varepsilon_{KN}(i) = a_N \cdot p(d_K - d_N) \cdot \cos(\phi_K - \phi_N) \cdot e^{i\phi_K} \qquad (2)$$

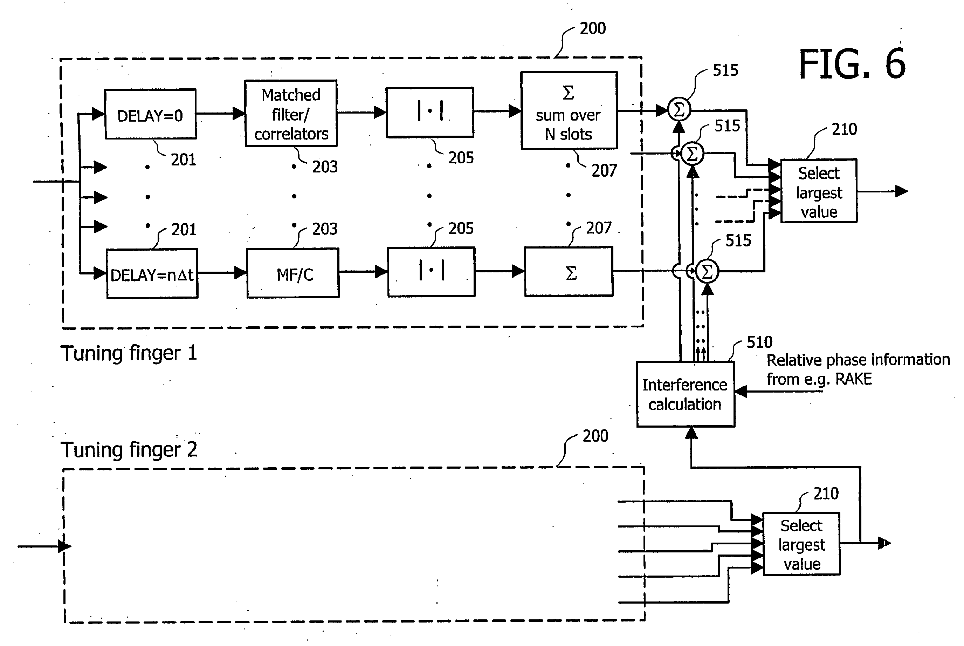

Figure 6 is a block diagram of an arrangement to improve the performance of the channel delay estimators according to an embodiment of the invention. The operation of a conventional channel delay estimator 200 is described above with respect to Figures 2 and 3. As noted above, each output of the channel delay estimator 200 is a real-valued, summed result for a corresponding signal position of the channel delay estimator 200, which reflects the magnitude of an estimate of the impulse response of the channel summed over several time slots. Conventionally, the selector 210 determines the position having the highest summed value. In this embodiment, each of the outputs (channel estimates) from the channel delay estimator 200 is subtracted 515 from a corresponding output from an interference calculator 510. The result of each subtraction of the channel estimate and the corresponding interference calculation is input to the selector 210.

The interference calculator 510 calculates the magnitude of interference from one ray projected onto another ray, using, for example, the relationship in Equation 2. As shown in Figure 6, the interference calculator 510 may use the output from a neighboring selector 210 as the interfering signal. The interference calculator 510 may get or derive the relative phase information from other portions of the receiver. For example, the estimated delay of each branch of each channel delay estimator 200 is known. The relative delay between two signals may be determined from the estimated delay, and the relative delay may be used to calculate the relative phase difference. Thus, the interference calculator 510 uses the real-valued channel estimates to determine the complex (magnitude and phase) interference from one channel on another.

In Figure 6, the interference calculator 510 uses the strongest signal from one of the other channel delay estimators as the interfering signal. As can be appreciated, other criteria could be used to select which signal to use as the interfering signal. For example, the interfering signal could be chosen based on similarity of delay. In addition, for the sake of clarity, Figure 6 only shows one interference calculator 510 and two channel delay estimators 200. It should be appreciated that additional interference calculators could be added to compensate for interference from additional channel delay estimators. Likewise, while Figure 6 only shows compensating the output of the first channel delay estimator with the output of the second channel delay estimator, the output of the second channel delay estimator could be compensated using the output of the first channel delay estimator.

Having only the absolute values from the tuning fingers, the RAKE receiver may take the instantaneous phase information for the specific paths and, at each delay, subtract a pulse shape positioned relative to the other path, with a gain according to the tuning finger value at its position, and a phase which is relative phase to the difference of the two paths in the RAKE receiver. One benefit from this technique is the ability to reduce the complexity of the tuning finger, since only the absolute values are needed as output. The resolution of paths may be increased due to interference cancelling. This technique may also be used to improve the tracking of changes in path delays and improve the allocation of tuning fingers.

The invention has now been described with respect to a single embodiment. In light of this disclosure, those skilled in the art will likely make alternate embodiments of this invention. For example, the invention has been described in relation to two rays in a CDMA system. One skilled in the art would find applications for this invention in other systems prone to multipath interference. In addition, expanding the application of this invention to include more than two rays would be apparent from this disclosure. These and other alternate embodiments are intended to fall within the scope of the claims which follow.

**Claims**

1. A method for reducing interpath interference between a first path signal and at least one other path signal in a channel delay estimator (200) in a radio receiver, the method involving the steps of:

   obtaining a relative phase ($\Phi 1 - \Phi 2$) of the first path signal and the at least one other path signal;
   determining (510), based on the relative phase, an interference component of the first path signal caused by the at least one other path signal; and
   removing the interference component from the first path signal, **characterized by** the steps of:

      generating an estimate of an impulse response of the first path;
      generating an estimate of an impulse response of the at least one other path;
      calculating (205) the absolute value of the estimate of the first path;
      calculating (205) the absolute value of the estimate of the at least one other path;
      calculating (510) a magnitude of the interference component based on a pulse shape of the transmitter and receiver filters representative of the interference component; and
      subtracting (515) the magnitude of the interference component from the absolute value of the estimate of the first path;
      wherein an amplitude of the pulse shape is scaled in relation to the absolute value of the estimate of the at least one other path and on the basis of an estimate of the phase difference between the first path signal and the at least one other path signal.

2. A method according to claim 1, wherein the step of obtaining the relative phase of the first path signal and the at least one other path signal is accomplished using phase information that is available to a combiner in the receiver.

3. A method according to any of the claims 1-2, wherein the radio receiver is a CDMA receiver.

4. A channel delay estimator in a receiver comprising:

   a plurality of correlators (203), wherein a signal applied to an input port of each of the plurality of correlators (203) produces a tuned output signal at a corresponding output port of the respective correlator (203);
   means for determining an absolute value (205) of the tuned output signal, wherein the output port of each correlator (203) is coupled to a corresponding input of the means for determining an absolute value (205);

   **characterized in that** the channel delay estimator comprises:

   means for determining interference (510); and
   an adder (515);
   wherein the means for determining interference (510) comprises:

      means for obtaining a phase difference between a first signal and at least one other signal;
      means for calculating a magnitude of an interference component on the first path signal caused by the at least one other path signal based on a pulse shape of the transmitter and receiver filters representative of the interference component;
      wherein an output of the means for determining interference (510) and an output of the means for determining an absolute value (205) are each coupled to a respective input of the adder (515), and the adder (515) comprises means for subtracting the magnitude of the interference component from an absolute value of a tuned output signal associated with the first path; and
      wherein an amplitude of the pulse shape is scaled in relation to an absolute value of a tuned output signal associated with the at least one other path signal and on the basis of the phase difference between the first signal and the at least one other signal.

5. A channel delay estimator according to claim 4, **characterized in that** the calculating means comprises logic adapted to evaluate the equation

$$\varepsilon_{12}(i) = a_2 \cdot p(\mathrm{d}_1 - \mathrm{d}_2) \cdot \cos(\phi_1 - \phi_2) \cdot e^{i\phi_1} \, ,$$

where $\varepsilon_{12}(i)$ is the magnitude of said interference component, $i$ is a particular instant in time, $a_2$ is the amplitude of said at least one other path signal, $p$ is the impulse response of transmitter and receiver filters, $d_1$ is the delay of said first path signal, $d_2$ is the delay of said at least one other path signal, and $\Phi_1 - \Phi_2$ is the relative phase of said first path signal with respect to said at least one other path signal.

6. A channel delay estimator according to claim 4 or 5, **characterized in that** the means for obtaining the phase difference between the first signal and at least one other signal uses phase information available to a combiner in the receiver.

7. A mobile radio terminal comprising a receiver, **characterized in that** the receiver comprises the channel delay estimator of any of the claims 4 - 6.

**Patentansprüche**

1. Verfahren zur Reduzierung von Zwischenpfad-Interferenz zwischen einem ersten Pfadsignal und zumindest einem anderen Pfadsignal in einem Kanalverzögerungsschätzer (200) in einem Funkempfänger, wobei das Verfahren die folgenden Schritte umfasst:

Erhalten einer relativen Phase ($\Phi_1 - \Phi_2$) des ersten Pfadsignals und des zumindest einen anderen Pfadsignals;
Bestimmen (510) einer Interferenzkomponente des ersten Pfadsignals, welches durch das zumindest eine andere Pfadsignal hervorgerufen wird, basierend auf der relativen Phase; und
Entfernen der Interferenzkomponente aus dem ersten Pfadsignal, **gekennzeichnet durch** die folgenden Schritte:

Erzeugen einer Schätzung einer Impulsantwort des ersten Pfades;
Erzeugen einer Schätzung einer Impulsantwort des zumindest einen anderen Pfades;
Berechnen (205) des Absolutwerts der Schätzung des ersten Pfades;
Berechnen (205) des Absolutwerts der Schätzung des zumindest einen anderen Pfades;
Berechnen (510) einer Größe der Interferenzkomponente basierend auf einer Pulsform der Transmitter- und Empfängerfilter, welche für die Interferenzkomponente repräsentativ ist; und
Subtrahieren (515) der Größe der Interferenzkomponente von dem Absolutwert der Schätzung des ersten Pfades;
wobei eine Amplitude der Pulsform in Relation zu dem Absolutwert der Schätzung des zumindest einen anderen Pfades und auf der Basis einer Schätzung der Phasendifferenz zwischen dem ersten Pfadsignal und dem zumindest einen anderen Pfadsignal skaliert wird.

2. Verfahren gemäß Anspruch 1, wobei der Schritt des Erhaltens der relativen Phase des ersten Pfadsignals und des zumindest einen anderen Pfadsignals mittels Phaseninformation realisiert wird, über die ein Kombinator im Empfänger verfügt.

3. Verfahren gemäß einem der Ansprüche 1-2, wobei der Funkempfänger ein CDMA-Empfänger ist.

4. Kanalverzögerungsschätzer in einem Empfänger, umfassend:

eine Vielzahl von Korrelatoren (203), wobei ein an einem Eingangsanschluss von jedem der Vielzahl von Korrelatoren (203) angelegtes Signal ein getuntes Ausgabesignal an einem entsprechenden Ausgangsanschluss des jeweiligen Korrelators (203) erzeugt;

Mittel zum Bestimmen eines Absolutwerts (205) des getunten Ausgabesignals, wobei der Ausgangsanschluss von jedem Korrelator (203) mit einer entsprechenden Eingabe des Mittels zum Bestimmen eines Absolutwerts (205) gekoppelt ist;
**dadurch gekennzeichnet, dass** der Kanalverzögerungsschätzer folgendes umfasst:

Mittel zum Bestimmen von Interferenz (510); und

einen Addierer (515);
wobei das Mittel zum Bestimmen von Interferenz (510) folgendes umfasst:

Mittel zum Erhalten einer Phasendifferenz zwischen einem ersten Signal und zumindest einem anderen Signal;
Mittel zum Berechnen einer Größe einer Interferenzkomponente im ersten Pfadsignal, die durch das zumindest eine andere Pfadsignal basierend auf einer Pulsform der Transmitter- und Empfängerfilters, die für die Interferenzkomponente repräsentativ ist, hervorgerufen wird;
wobei eine Ausgabe des Mittels zum Bestimmen von Interferenz (510) und eine Ausgabe des Mittels zum Bestimmen eines Absolutwerts (205) jeweils mit einem jeweiligen Eingang des Addierers (515) gekoppelt sind, und der Addierer (515) Mittel zum Subtrahieren der Größe der Interferenzkomponente von einem Absolutwert eines getunten Ausgabesignals, welches dem ersten Pfad zugeordnet sind, umfasst; und
wobei eine Amplitude der Pulsform in Relation zu einem Absolutwert eines getunten Ausgabesignals, welches dem zumindest einen anderen Pfadsignal zugeordnet ist, und auf der Basis der Phasendifferenz zwischen dem ersten Signal und dem zumindest einen anderen Signal skaliert wird.

5. Kanalverzögerungsschätzer gemäß Anspruch 4, **dadurch gekennzeichnet, dass** das Berechnungsmittel eine Logik umfasst, die zur Berechnung der folgenden Gleichung eingerichtet ist:

$$\varepsilon_{12}(i) = a_2 \cdot p(\mathrm{d}_1 - \mathrm{d}_2) \cdot \cos(\phi_1 - \phi_2) \cdot e^{i\phi_1},$$

wobei $\varepsilon_{12}(i)$ die Größe der Interferenzkomponente ist, $i$ ein bestimmter Zeitpunkt ist, $a_2$ die Amplitude des zumindest einen anderen Pfadsignals ist, p die Impulsantwort der Transmitter- und Empfängerfilter ist, $d_1$ die Verzögerung des ersten Pfadsignals ist, $d_2$ die Verzögerung des zumindest einen anderen Pfadsignals ist, und $\Phi_1 - \Phi_2$ die relative Phase des ersten Pfadsignals bezüglich des zumindest einen anderen Pfadsignals ist.

6. Kanalverzögerungsschätzer gemäß Anspruch 4 oder 5, **dadurch gekennzeichnet, dass** das Mittel zum Erhalten der Phasendifferenz zwischen dem ersten Signal und zumindest einem anderen Signal Phaseninformationen verwendet, über die ein Kombinierer im Empfänger verfügt.

7. Mobiles Funkgerät umfassend einen Empfänger, **dadurch gekennzeichnet, dass** der Empfänger den Kanalverzögerungsschätzer nach einem der Ansprüche 4-6 umfasst.

**Revendications**

1. Procédé de réduction des interférences entre trajets entre un premier signal de trajet et au moins un autre signal de trajet dans un estimateur de retard de canal (200) dans un récepteur radio, le procédé comprenant les étapes suivantes :

l'obtention d'une phase relative (Φ1 - Φ2) du premier signal de trajet et de l'au moins un autre signal de trajet ;
la détermination (510), sur la base de la phase relative, d'une composante d'interférences du premier signal de trajet causée par l'au moins un autre signal de trajet ; et
l'élimination de la composante d'interférences du premier signal de trajet, **caractérisé par** les étapes suivantes :

la génération d'une estimation d'une réponse impulsionnelle du premier trajet ;
la génération d'une estimation d'une réponse impulsionnelle de l'au moins un autre trajet ;
le calcul (205) de la valeur absolue de l'estimation du premier trajet ;
le calcul (205) de la valeur absolue de l'estimation de l'au moins un autre trajet ;

le calcul (510) d'une grandeur de la composante d'interférences sur la base d'une forme d'impulsion λ des filtres d'émetteur et de récepteur représentative de la composante d'interférences ; et
la soustraction (515) de la grandeur de la composante d'interférences de la valeur absolue de l'estimation du premier trajet ;
dans lequel une amplitude de la forme d'impulsion est ajustée en fonction de la valeur absolue de l'estimation de l'au moins un autre trajet et sur la base d'une estimation de la différence de phase entre le premier signal de trajet et l'au moins un autre signal de trajet.

2. Procédé selon la revendication 1, dans lequel l'étape d'obtention de la phase relative du premier signal de trajet et de l'au moins un autre signal de trajet est accomplie en utilisant les informations de phase qui sont disponibles pour un combinateur dans le récepteur.

3. Procédé selon l'une quelconque des revendications 1 et 2, dans lequel le récepteur radio est un récepteur CDMA.

4. Estimateur de retard de canal dans un récepteur comprenant :

une pluralité de corrélateurs (203), un signal appliqué à un port d'entrée de chacun de la pluralité de corrélateurs (203) produisant un signal de sortie accordé au niveau d'un port de sortie correspondant du corrélateur respectif (203) ;
des moyens de détermination d'une valeur absolue (205) du signal de sortie accordé, le port de sortie de chaque corrélateur (203) étant couplé à une entrée correspondante des moyens de détermination d'une valeur absolue (205) ;
**caractérisé en ce que** l'estimateur de retard de canal comprend :

des moyens de détermination d'interférences (510) ; et
un sommateur (515) ;
dans lequel les moyens de détermination d'interférences (510) comprennent :

des moyens d'obtention d'une différence de phase entre un premier signal et au moins un autre signal ;
des moyens de calcul d'une grandeur d'une composante d'interférences sur le premier signal de trajet causée par l'au moins un autre signal de trajet sur la base d'une forme d'impulsion λ des filtres d'émetteur et de récepteur représentative de la composante d'interférences ;
dans lequel une sortie des moyens de détermination d'interférences (510) et une sortie des moyens de détermination d'une valeur absolue (205) sont chacune couplées à une entrée respective du sommateur (515), et le sommateur (515) comprend des moyens de soustraction de la grandeur de la composante d'interférences d'une valeur absolue d'un signal de sortie accordé associée au premier trajet ; et
dans lequel une amplitude de la forme d'impulsion est ajustée en fonction d'une valeur absolue d'un signal de sortie accordé associée à l'au moins un autre signal de trajet et sur la base de la différence de phase entre le premier signal et l'au moins un autre signal.

5. Estimateur de retard de canal selon la revendication 4, **caractérisé en ce que** les moyens de calcul comprennent une logique adaptée pour évaluer l'équation

$$\varepsilon_{12}(i) = a_2 \cdot p(\mathrm{d}_1 - \mathrm{d}_2) \cdot \cos(\phi_1 - \phi_2) \cdot e^{i\phi 1}$$

où $\varepsilon_{12}(i)$ est la grandeur de ladite composante d'interférences, i est un instant particulier dans le temps, $a_2$ est l'amplitude dudit au moins un autre signal de trajet, p est la réponse impulsionnelle des filtres d'émetteur et de récepteur, $d_1$ est le retard dudit premier signal de trajet, $d_2$ est le retard dudit au moins un autre signal de trajet, et $\Phi1 - \Phi2$ est la phase relative dudit premier signal de trajet par rapport audit au moins un autre signal de trajet.

6. Estimateur de retard de canal selon la revendication 4 ou 5, **caractérisé en ce que** les moyens d'obtention de la différence de phase entre le premier signal et au moins un autre signal utilisent des informations de phase disponibles pour un combinateur dans le récepteur.

**7.** Terminal radio mobile comprenant un récepteur, **caractérisé en ce que** le récepteur comprend l'estimateur de retard de canal selon l'une quelconque des revendications 4 à 6.

FIG. 1

FIG. 2

FIG. 3

EP 1 454 421 B1

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0211308 A